Europäisches Patentamt

European Patent Office

Office européen des brevets

(11) Publication number: **0 154 086**
**A2**

(12) **EUROPEAN PATENT APPLICATION**

(21) Application number: **84308293.4**

(22) Date of filing: **29.11.84**

(51) Int. Cl.⁴: **G 11 B 20/14**
**H 04 L 25/49, H 03 M 5 14**
**G 11 B 20/10**
**//G11B5/035**

(30) Priority: **24.02.84 US 583476**

(43) Date of publication of application:
**11.09.85 Bulletin 85/37**

(84) Designated Contracting States:
**DE FR GB**

(71) Applicant: **MAGNETIC PERIPHERALS INC.**
**8100-34th Avenue South**
**Minneapolis Minnesota 55440(US)**

(72) Inventor: **Vinding, Jorgen Plesner**
**18780 Withey Road**
**Monte Sereno California 95030(US)**

(74) Representative: **Caro, William Egerton et al,**
**J. MILLER & CO. Lincoln House 296-302 High Holborn**
**London WC1V 7JH(GB)**

(54) Data recovery circuit.

(57) A data recovery circuit for a data recording/transmission system wherein information is encoded in an equalised data signal comprising at least partly doublet pulses, each valid doublet pulse comprising two adjacent opposite polarity pulses, the data recovery circuit being arranged to distinguish individual doublets from noise in the equalised data signal, receiving the equalised data signal, and responsive thereto supplying a doublet indentification signal identifying individual portions of the equalised data signal as constituting doublets, comprises a differentiator (11) connected to receive the equalised data signal to provide an output signal having a waveform following the time derivative of the equalised data signal, and having a predetermined delay time. A first comparator (15, 16) is connected to receive an output of the differentiator (11) for providing, as an output, a logic level signal having first, second and third instantaneous states indicating that the output signal of the differentiator is respectively less than, within, or greater than a first predetermined signal range whose minimum corresponds to an equalised data signal slope smaller than a first predetermined negative slope, and whose maximum corresponds to a slope greater than a second predetermined positive slope. An amplifier (20) is connected to receive a delayed equalised data signal for supplying an amplified output signal having a waveform following the equalised data signal and delayed by a predetermined delay time therefrom. A delay element is connected to receive the equalised data signal, for supplying the delayed equalised data signal to the amplifier (20). An analog gate (23, 24) is connected to receive the amplified output signal from the amplifier and the logic level signal from the first comparator (15) for supplying an output signal including a first portion following the amplified output signal while the logic level signal of the first comparator means has exclusively its first state and a second portion following the amplified output signal while the logic level signal of the first comparator has exclusively its third state, each portion having a predetermined level otherwise. A second comparator (27) is connected to receive the output of signal of the analog gate (23, 24) for producing responsive thereto, a logic signal having first, second and third instantaneous states, the first state and the third state of the second comparator indicating, respectively, that the first portion and the second portion of the output signal of the analog gate are outside a second predetermined signal range, and the second state of the second comparator indicating that, both first and second portions of the output signal of the analog gate are within the second predetermined range, the second predetermined signal range substantially corresponding to the minimum excursion of the equalised data signal between points (i) having slopes corresponding to the first and second predetermined slopes and (ii) between peaks of a valid doublet pulse, the second comparator producing a doublet identification signal.
./...

Croydon Printing Company Ltd.

Fig. 1

DATA RECOVERY CIRCUIT

This invention relates to data recovery circuits for data recording/transmission systems wherein information is encoded in an equalised data signal comprising at least partly doublet pulses, each valid doublet pulse comprising two adjacent opposite polarity pulses.

In data recording/transmission systems a multitude of improvements in all areas of the technology have contributed to drastic reductions in the cost of recording or transmitting an individual bit. Among the areas providing this contribution is that related to the encoding and decoding of the data involved. There have been a number of coding techniques developed that have progressively reduced the number of flux reversals or signal changes necessary for each information bit involved. The problem has always been complicated by the fact that the data itself must contain enough clock information so that the readback or receiving circuitry can synchronize with the data being read back or received in the face of noise and gradual frequency variations in the data. In these coding techniques individual flux reversals or signal changes create a continuous output signal, with the information content present in the time of individual reversals.

One of the most efficient techniques of encoding such data is known as ternary encoding, which is characterised by two classes of signal elements, singlet pulses and doublet pulses. It is convenient to consider the frequency of the data clock for ternary encoding as being established by a single cell time. A singlet pulse is generated by a single, relatively isolated, flux or signal transition occupying at least 3 cell times, the polarity of each singlet pulse on readback being opposite that of the previous singlet. The polarity of a singlet pulse is established by the direction in the medium or channel of the flux reversal or signal change, which generates the singlet pulse during readback. A doublet pulse comprises 2 flux reversals of opposite polarity spaced 1 cell time apart, whose mutual interference create a pulse of at least 4 cell times and create 2 closely spaced peaks of opposite polarity with a zero crossing transition between them. For purposes of synchronizing these pulses in the clock in the readback circuitry, a singlet pulse is considered to occur in the middle of the 3 pulses which it occupies, while a doublet is considered to occur at the zero crossing between the 2 opposite polarity peaks which form it. Because each doublet is formed of 2 flux reversals of opposite direction, it is clear that the flux reversals for successive singlets are of opposite polarity regardless of the number of doublets interposed between them.

Although the original flux reversals during writing which create the pulses on readback are nominally of the same strength, the greater spacing between each singlet and adjacent pulses than between half-cycles of a doublet causes each singlet on readback to have substantially greater duration and magnitude than a doublet half-cycle. This makes reliable detection of a singlet much easier than detection of a doublet.

Noise and pulse crowding can cause doublets to be improperly detected. A known way of screening out some of the false zero crossings created by noise is, during signal processing, to compare the slope of the transition portion of a doublet between the peaks, with the polarity of the most recent singlet. One can see that the polarity of this slope and the most recent singlet should be the same. It is possible, however, that noise in the readback signal can occasionally cause data to be read back falsely with compatible slope polarity, and hence produce errors.

It should be understood that many types of ternary codes can be devised, all having a different relationship with respect to the sequence of singlet and doublet pulses and the spacing between them. In fact, a typical ternary code may permit as many as 8 cell times between the actual time of arrival of 2 adjacent pulses, singlet or doublet. It is particularly during these gaps that noise can intrude to cause the readback errors mentioned.

It should also be understood that other types of data encoding may employ doublets. For example, vertical recording techniques use only doublet pulses to carry information, making reliable detection of these pulses even more critical.

U.S. Patent Specification No. 3,631,263 discloses apparatus where peak detection in combination with peak-to-peak voltage transition discrimination is used to reject noise having relatively small peak-to-peak transitions.

Many errors are caused by such low amplitude noise wave forms with relatively steep transitions between positive and negative peaks. The slope of these transitions is frequently similar to that of a legitimate doublet. However, in the encoding schemes discussed above, noise which may mimic a doublet may also have peaks whose amplitudes are similar to that of a true doublet, but wherein the transition time between these peaks is relatively long. The present invention seeks to provide circuitry which not only rejects low amplitude noise with steep wave fronts, but also rejects high amplitude noise with a more sloping transition between the peaks. In addition, the circuitry aims to use a substantial percentage of the transitions between peaks in determining slope and amplitude, thereby still further reducing sensitivity to noise. All this may be accomplished by proper selection of the individual functional elements of the data recovery circuit.

According to the present invention there is provided a data recovery circuit for a data recording/transmission system wherein information is encoded in an equalised data signal comprising at least partly doublet pulses, each valid doublet pulse comprising two adjacent opposite polarity pulses, the data recovery circuit being arranged to distinguish individual doublets from noise in the equalised data signal, receiving the equalised data signal, and responsive thereto supplying a doublet identification signal identifying individual portions of the equalised data signal as constituting doublets, the data recovery circuit being characterised by comprising: a differentiator connected to receive the equalised data signal to provide an output signal having a waveform following the time derivative of the equalised data signal, and having a predetermined delay time; first comparator means connected to receive an output of the differentiator for providing, as an output, a logic level signal having first, second, and third instantaneous states indicating that the output signal of the differentiator is respectively less than, within, or greater than a first predetermined signal range whose minimum corresponds to an equalised data signal slope smaller than a first predetermined negative slope, and whose maximum corresponds to a slope greater than a second predetermined positive slope; an amplifier connected to receive a delayed equalised data signal for supplying an amplified output signal having a waveform following the equalised data signal and delayed by a predetermined delay time therefrom; a delay element connected to receive the equalized data signal, for supplying the delayed equalised data signal to the amplifier; analog gate means connected to receive the amplified output signal from the amplifier and the logic level signal from the first comparator means for supplying an output signal including a first portion following the amplified output signal while the logic level of the first comparator means has exclusively its first state and a second portion following the amplified output signal while the logic level signal of the first comparator means has exclusively its third state, each portion having a predetermined level otherwise; and second comparator means connected to receive the output of signal of the analog gate means for producing responsive thereto, a logic signal having first, second, and third instantaneous states, said first state and said third state of the second comparator means indicating, respectively, that the first portion and the second portion of the output signal of the analog gate means are outside a second predetermined signal range, and said second state of the second comparator means indicating that both first and second portions of the output signal of the analog gate means are within the second predetermined range, said second predetermined signal range substantially corresponding to the minimum excursion of the equalised data signal between points (i) having slopes corresponding to the first and second predetermined slopes and (ii) between peaks of a valid doublet pulse, the second comparator means producing a doublet identification signal.

By "equalised data signal" is meant one whose pulses have been narrowed and made more symmetric.

This data recovery circuit, while the equalised data signal slope exceeds a certain steepness as indicated by the derivative falling below the first signal range minimum or above the first signal range maximum, measures the voltage excursion during this interval. If it exceeds the minimum which can be expected for a valid doublet for the particular recording system involved, then it can be assumed to be the transition between the peaks of a valid doublet rather than noise. (In the ternary encoding case, adjacent singlets will be detected as a valid doublet by this circuit also, but these can easily be identified as singlets and the system caused to ignore this circuit's output). Use of the components described above allow the signal measurements described with a minimum of elements required.

Accordingly the present invention has the following aims: to reject potential doublet waveforms whose transition between peaks does not have sufficient steepness; to reject potential doublet waveforms whose voltage excursion between points which have at least the required steepness is not sufficiently great; to employ as much of the voltage transition between peaks as can be reasonably done; to perform this processing with a minimum number of circuit elements; to allow easy selection or control of the steepness of a valid doublet transition and the minimum permissible voltage change in that transition.

The invention is illustrated, merely by way of example, in the accompanying drawings, in which:-

Figure 1 is a diagram of a data recovery circuit according to the present invention, and formed of functional elements commonly available in off-the-shelf form; and

Figure 2 comprises a number of waveforms useful in describing the operation of the data recovery circuit of Figure 1.

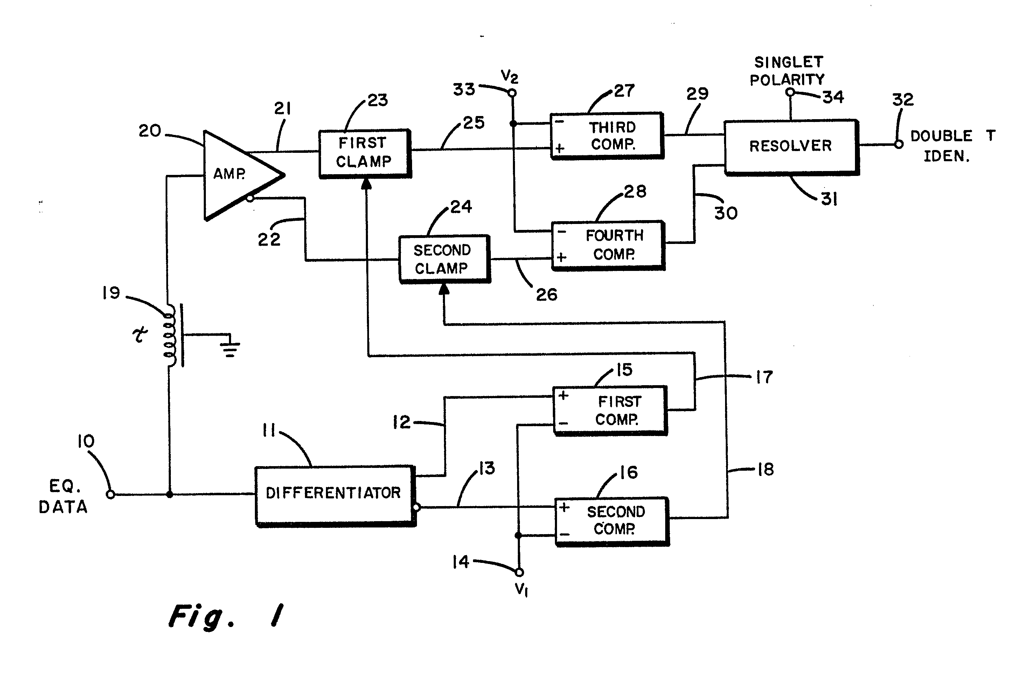

Turning first to Figure 1, there is illustrated a data recovery circuit according to the present invention, where an equalised data signal (as defined above) is applied to an input terminal 10. A differentiator 11 receives the equalised data signal and produces an output signal having a true, or normal, value on a signal path 12 and a value on a signal path 13 inverted with respect to, and synchronized with, the signal on the path 12. The signal on the path 12 is a waveform which follows the time derivatibe of the equalised data. That is, it crosses zero (or a predetermined baseline) at peaks of the equalised data, and reaches maximum and minimum, respectively, as the slope of the equalised data signal is respectively greatest, i.e. most positive, and least i.e. most negative.

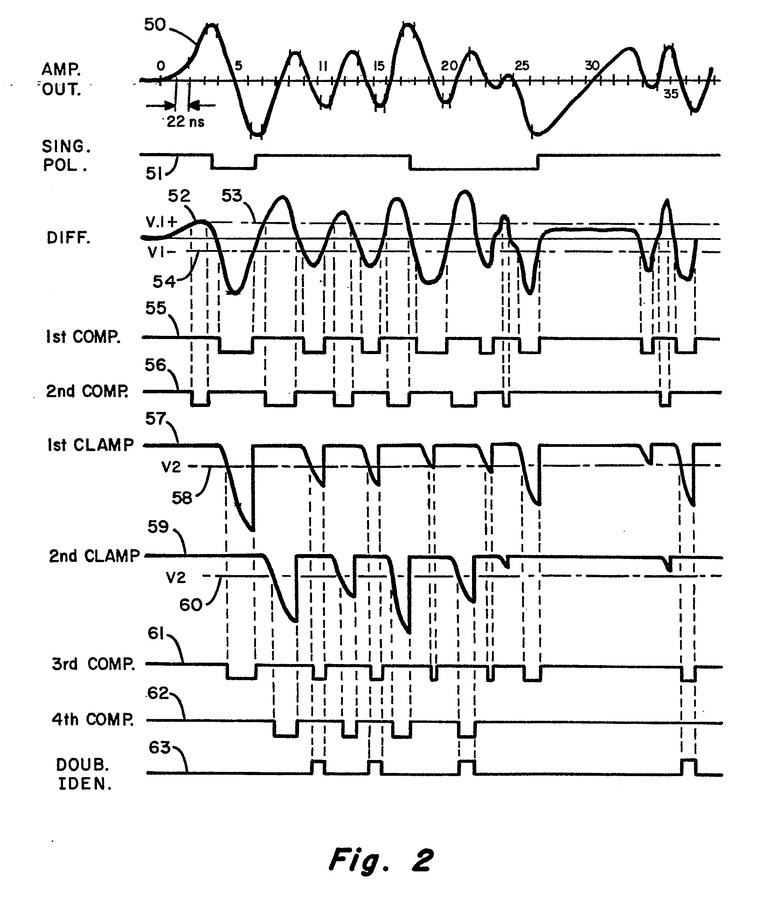

Turning to Figure 2, the equalised data signal is shown by waveform 50, labeled AMP. OUT. To aid in the description of various portions of this waveform, individual cell times have been numbered, starting with 0 and running up to 35. References to portions of each waveform will be in terms of the number assigned to the individual cell time, and individual references to an interval of several adjoining cell times will always be inclusive, i.e. the interval mentioned will run from the first mentioned cell time number to the last. As indicated in waveform 50, an individual cell time has a 22 ns. duration in a preferred system for which this data recovery circuit has been proposed.

To simplify understanding of the waveforms in Figure 2, the equalised data signal applied to the terminal 10 is shown as time delayed. The waveform 50 is, in fact, identical to the signal at the terminal 10 but delayed with respect to it by a delay element 19 and an amplifier 20. The waveform 50 reproduces the equalised data signal on a path 21. The delay element 19 preferably has the delay interval inherent in the differentiator 11. More precisely it should produce a delay equal to the difference between the delay of the differentiator 11 together with the delay of a first comparator 15 or a second comparator 16 less the delay of the amplifier 20 delay. The signal issuing from the delay element 19 is applied to the input of the amplifier 20. The output of the amplifier 20 (the waveform 50) is therefore delayed with respect to the equalised data signal at the terminal 10. Thus, the signal output from the amplifier 20 on the path 21 is substantially synchronized with a derivative signal shown as waveform 52 labeled DIFF. (and all other waveforms in Figure 2) and carried on the path 12.

The true and inverted outputs of the differentiator 11 are applied on the paths 12, 13 to the positive input terminals of the first and second comparators 15, 16 respectively. Comparators 15, 16 and third and fourth comparators 27, 28, respectively also are standard circuit elements having inputs conventionally labeled with positive and negative signs. When the voltage at the positive input of one of the comparators exceeds that at its negative input a high logic level is produced at its output, connected to a path 17 in the case of the first comparator 15. When the voltage level at the positive input of one of the comparators is less than that at its negative input then a low logic level is produced at its output.

A constant voltage $V_1$, a small negative value in the circuit of Figure 1, is applied from a terminal 14 to the negative inputs of first and second comparators 15, 16. The voltage $V_1$ is selected to correspond to an equalised data signal slope greater than a predetermined negative slope insofar as it is applied to the negative input of the first comparator 15, for the comparator 15 carries the derivative value involved with processing portions of the equalised data waveform having negative slopes. A $V_1$ voltage line 54 negatively displaced from the baseline represents the relationship of the true derivative signal on the path 12 to $V_1$. Similarly, the voltage $V_1$, as applied to the negative input of the second comparator 16, corresponds to an equalised data signal slope which is greater, i.e. more positive, than a first predetermined positive slope, since the second comparator 16 is involved with processing equalised data signal transitions having positive slopes. This seemingly confusing situation results from the fact that the second comparator 16 receives an inverted derivative signal from the differentiator 11. A similar predetermined voltage of identical magnitude is shown as a $V_1+$ voltage line 53 but having a positive displacement from the bseline. It is easiest to illustrate the operation of the second comparator 16 and the inverted differential on the path 13 by simply assuming the reference voltage $V_1$ has a positive value and performing the analysis of the operation of the second comparator on that basis, as shown by waveform 52.

Referring to Figure 2, the pulses in the waveform 50 occurring in cell time 0-4 and 5-7 are both singlet pulses, shown simply for purposes of comparison. Singlet pulses are substantially larger than doublet pulses, as mentioned earlier.

The two pulses which extend from the last half of cell time 8 to the first half of cell time 12 comprise the first doublet, and for purposes of this analysis form a valid doublet. The peak-to-peak transition occupying all of the cell time 10 is therefore the first valid doublet transition. As can be seen, this transition has a negative slope. The waveform 52 on the path 12 accordingly shows a negative peak coinciding with this cell time. Voltage $V_1$ (having a small negative value) applied by the terminal 14 to negative input of the first comparator 15 and shown by the voltage line 54, causes the output of the first comparator 15 to change from a high logic level to a low logic level around the start of the cell time 10 because the positive input of the first comparator 15 has become more negative than voltage $V_1$ at this time, as shown in 1st COMP. waveform 55. By way of further explanation, the positive-going voltage transition passing through the cell time 12 is applied in an inverted form <u>via</u> the path 13 to the positive input of the second comparator 16 to fall <u>below</u> the voltage at its negative input connected to the voltage $V_1$ at approximately the

0154086

-9-

start of the cell time 12. At this instant, the logic level output of the second comparator, (2d COMP.) waveform 56 on a path 18, changes from a high logic level to low logic level. Thus, a first predetermined signal range for the waveform 52 is in effect created by this arrangement running from $-V_1$ to $+V_1$, or -.1 V. to +.1 V. for the preferred data recovery circuit. A first state of the output of the comparators 15, 16 is defined as waveforms 55, 56 having low and high logic levels respectively. A third state of the output comprises waveforms 55, 56 having high and low logic levels respectively and a second state of the output exists when both waveforms 55, 56 are high.

The outputs of the first comparator 15 and the second comparator 16 are carried by the paths 17, 18, respectively, to the control terminals of a first clamp 23 and a second clamp 24. The input terminals of the clamps 23, 24, respectively, receive the true delayed equalised data signal, waveform 50, on the path 21 and an inverted delayed and equalised data signal, waveform 50, on a path 22 synchronous with the signal on the path 21. The clamps 23, 24 function in concert as an analog gate means which provide outputs on paths 25, 26 respectively, which are clamped to a characteristic clamp voltage level (+1.25 v. in one preferred embodiment) when the control voltage on the terminals attached to the paths 17, 18, respectively, is the high logic level, and follows the input voltage change on path 21 or path 22 when the voltage on the control terminal involved is the low logic level. For example, considering again the waveform 50 transition passing through the cell time 10, the first comparator 15 output shown in the waveform 55 has a low logic level (first state for the outputs of the comparators 15, 16) and a 1st CLAMP waveform 57 for the output of the first clamp 23 during the cell time 10 follows the voltage transition for the waveform 50, ramping downwardly until the derivative on the path 12 becomes more positive than the voltage $V_1$, whereupon the output of the first clamp 23 is pulled up to the characteristic clamp voltage level. Similarly, for the transition passing through the cell time 12, the positive input of the second comparator 16 becomes more negative than its corresponding negative input, so that the corresponding low logic level in waveform 56 of the second comparator 16 (third state for the outputs of the comparators 15,16) allows the output of the second clamp 24 on the path 26 to follow the change in the inverted equalised data signal on the path 22 during this interval, as shown by the corresponding portion of a 2nd CLAMP waveform 59. Thus, one can see that either one or the other of the clamps 23, 24 are unclamped, or both are clamped, for the simple reason that a waveform cannot have negative and positive slopes at the same time.

The outputs of the clamps 23, 24 are respectively applied on the paths 25, 26 to the positive inputs of the third and fourth comparators 27, 28. The negative inputs of the third and fourth comparators 27, 28 receive from a terminal 33 a second reference voltage $V_2$. For analysing the operation of the third and fourth comparators 27, 28 the voltage $V_2$ is shown as $V_2$ voltage lines 58, 60 in the waveforms 57, 59 for the clamps 23, 24 respectively. For clamps of the type described, which clamp to a +1.25 v. level, it is preferable to use a seocnd reference voltage $V_2$ equal 0 v. Thus, a 1.25 v. excursion in the output of either the first clamp 23 or the second clamp 24 is necessary for the waveform 57 or 59 to cross (in the negative direction) its corresponding voltage $V_2$. Thus, a second predetermined signal range is created running from the voltage $V_2$ to above the characteristic clamp voltage. If the voltage change gated by either the first clamp 23 or the second clamp 24 swings below this second predetermined range, the associated comparator 27 or comparator 28 will respond.

Recalling that third and fourth comparators 27, 28 function identically to first and second comparators 15, 16, therefore when either waveform 57 or 59 is more positive than the voltage $V_2$, the output of the third comparator 27 or the fourth comparator 28 is a high logic level. Considering again the voltage transiticn through the cell time 10 of the waveform 50, once the voltage from the first clamp 23 on the path 25 falls below the voltage $V_2$,

then the corresponding output of the third comparator 27 shown in 3d COMP. waveform 61, changes from a high logic level to a low logic level and maintains a low logic level for the time during which this voltage relationship at the input of the third comparator 27 exists. Similarly, when the signal on the path 26 from the second clamp 24 as shown in waveform 59 falls below the voltage $V_2$ in cell time 12 and adjacent to it, the output of the fourth comparator 28 becomes low logic level during this interval and producing the corresponding pulse shown in 4th COMP. waveform 62. Therefore, the output from the third and fourth comparators 27, 28 have essentially three different states in combination, a first state when the logic level of the waveform 61 is low logic level and the waveform 62 is high logic level, a second value when both are high logic levels, and a third when the waveform 61 is high logic level and the waveform 62 is a low logic level. In essence, the third and fourth comparators 27, 28 produce high logic levels while their respective clamp output voltages are nearer to the characteristic clamp voltage than is the voltage $V_2$, and a low logic level otherwise. The output signals from the comparators 27, 28 therefore contain sufficient information to identify individual portions of the equalised data signal as constituting valid doublets. This is the doublet identification signal desired.

A resolver 31 receives the outputs of the third and fourth comparators 27, 28 on signal paths 29 and 30, respectively, and a waveform indicating singlet polarity shown by waveform 51. As shown, since the latest singlet preceding the voltage transition in the equalised data signal at cell time 12 is negative, therefore only doublet peak-to-peak transitions having a negative slop are valid. Therefore, the doublet identified signal produced by the resolver 31 at a terminal 32 and shown as DOUB. IDEN. waveform 63 in Figure 2, has a corresponding pulse at cell time 10. The transition from a negative to positive peak passing through the cell time 12 has a positive slope and therefore, is opposite that of the latest singlet pulse. Therefore, the resolver 31 does not produce a pulse corresponding to the low pulse at cell time 12 in the waveform 62.

To illustrate how this data recovery circuit rejects high frequency, low amplitude noise, consider such noise occupying cell times 23, 24. The waveform 50 at the beginning of the cell time 24 has a slope for which the waveform 52 exceeds the voltage $V_1$, and hence a corresponding low logic level pulse is shown in the waveform 56. However, the voltage swing in the waveform 50 during the time that the waveform 52 exceeds the voltage $V_1$ is so small that the waveform 59 never falls below the voltage $V_2$, i.e. outside of the second predetermined range. Accordingly, the output of the fourth comparator 28 shown in waveform 61 does not change from a high to a low logic level in this interval. Therefore, the waveform 63 does not produce a doublet-indicating pulse.

The portion of the waveform 50 occupying cell times 26 to 32 illustrates the capability of this data recovery circuit to deal with and reject high amplitude low frequency noise. The peak-to-peak transition in the waveform 50 occupying the cell times 26 to 32 has a voltage excursion sufficient to appear to be a valid doublet. Furthermore, its slope, positive, corresponds to the polarity of the most recent singlet, which occurred during cell times 16 to 18. However, the slope, as shown in waveform 52, never becomes great enough to reach the voltage $V_1$; hence, the second comparator 16 does not enable the second clamp 24 to gate this transition to the fourth comparator 28. Accordingly, no corresponding pulse is produced by the fourth comparator 28, and the waveform 63 contains no pulse signifying occurrence of a doublet during this interval.

As a further illustration, considering the voltage transition occupying the cell time 33. This transition also has sufficient negtive slope to cause the first comparator 15 to enable the first clamp 23. However, the voltage transition in the waveform 50 is insufficient to cause the waveform 57 to fall below the voltage $V_2$, and, therefore, this transition is removed from further consideration as a valid doublet transition. A similar analysis can be made for the transition occupying the major portion of the cell time 35. Unlike that occupying the cell time 33, the slope of this transition is of the same polarity as the most recent singlet (cell time 17) and hence, if the level of the output of the second clamp 24 as shown in waveform 59, fell below the voltage $V_2$, a valid doublet would be indicated as having occurred. However, in this case, the small voltage swing between the peak occurring in the cell time 34 and that occurring in the cell time 35 is not sufficient to trigger a low logic level from the fourth comparator 28.

One should realize that many different relationships between the characteristic voltage levels for the components involved are possible. For certain off-the-shelf devices now available and incorporated in the data recovery circuit just described, these voltage levels neatly complement each other, as shown.

## CLAIMS

1.      A data recovery circuit for a data recording/transmission system wherein information is encoded in an equalised data signal comprising at least partly doublet pulses, each valid doublet pulse comprising two adjacent opposite polarity pulses, the data recovery circuit being arranged to distinguish individual doublets from noise in the equalised data signal, receiving the equalised data signal, and responsive thereto supplying a doublet identification signal identifying individual portions of the equalised data signal as constituting doublets, the data recovery circuit being characterised by comprising: a differentiator (11) connected to receive the equalised data signal to provide an output signal having a waveform following the time derivative of the equalised data signal, and having a predetermined delay time; first comparator means (15,16) connected to receive an output of the differentiator (11) for providing, as an output, a logic level signal having first, second, and third instantaneous states indicating that the output signal of the differentiator is respectively less than, within, or greater than a first predetermined signal range whose minimum corresponds to an equalised data signal slope smaller than a first predetermined negative slope, and whose maximum corresponds to a slope greater than a second predetermined positive slope; an amplifier (20) connected to receive a delayed equalised data signal for supplying an amplified output signal having a waveform following the equalised data signal and delayed by a predetermined delay time therefrom; a delay element (19) connected to receive the equalized data signal, for supplying the delayed equalised data signal to the amplifier (20); analog gate means (23,24) connected to receive the amplified output signal from the amplifier and the logic level signal from the first comparator means (15) for supplying an output signal including a first portion following the amplified output signal while the logic level of the first comparator means has exclusively its first state and a second portion following the amplified output signal while the logic level signal of the first comparator means has exclusively its third state, each portion having a predetermined level otherwise; and second comparator means (27) connected to receive the output of signal of the analog gate means (23,24) for producing responsive thereto, a logic signal having first, second, and third instantaneous states, said first state and said third state of the second comparator means indicating, respectively, that the first portion and the second portion of the output signal of the analog gate means are outside a second predetermined signal range, and said second state of the second comparator means indicating that both first and second portions of the output signal of the analog gate means are within the second predetermined range, said second predetermined signal range substantially corresponding to the minimum excursion of the equalised data signal between points (i) having slopes corresponding to the first and second predetermined slopes and (ii) between peaks of a valid doublet pulse, the second comparator means producing a doublet identification signal.

2. A data recovery circuit as claimed in claim 1 characterised by including a first voltage source ($V_1$) with a fixed output having a predetermined relationship with the first and second predetermined slopes, and a second voltage source ($V_2$) having a fixed output with a predetermined relationship with the second predetermined range, the differentiator (11) comprises a differentiator for producing a voltage signal having a true waveform following the time derivative of the equalised data signal and a waveform inverted with respect to the true waveform and synchronous therewith, the first and second comparator means comprise first and second comparators (15,16) and third and fourth comparators (27,28) respectively, each comparator having first and second input terminals and an output terminal for producing first and second logic voltage levels according as a voltage applied to the first input terminal is respectively more or less positive than a voltage applied to the second input terminal, said first and second comparators having substantially the same delay time and said third and fourth comparators having substantially the same delay time, the output of the first voltage source being connected to the first input terminals of the first and second comparators and the true and inverted waveforms of the differentiator being applied to the second input terminals of the first and second comparators, respectively, the amplifier (20) comprising an amplifier for producing the amplified output signal and having a true waveform following the equalised data signal and delayed by the predetermined delay time therefrom, and a waveform inverted with respect to the true waveform and synchronous therewith, the analog gate means (23) comprising first and second clamp circuits (23, 24) respectively being connected to receive the true and inverted waveform outputs from the amplifier (20) at a signal input terminal of each, and connected to receive at a control terminal of each the output of the first and second comparators (15, 16) respectively, each said clamp circuit in response to the second logic voltage level at its control terminal being arranged to clamp its output voltage at a predetermined characteristic value, and responsive to the first logic voltage level at its control terminal, causing its output voltage to follow the input voltage, the third and fourth comparators (27, 28) being connected to receive at their second terminals the output of respectively the first and second clamp circuits (23, 24) and at their first terminals the output of the second fixed voltage source, and responsive thereto the third and fourth comparators (27, 28) supply respectively output signals having second logic voltage levels while the output voltages of the first and second clamp circuits respectively are nearer the predetermined characteristic value than is the fixed output of the second voltage source and first logic voltage levels otherwise.

3.    A data recovery circuit as claimed in claim 1 or 2 characterised in that the delay element (19) includes a delay mechanism for producing a delay equal to the difference between the delay of the differentiator (11) plus the delay of the first comparator means (15) less the delay of the amplifier (20).

Fig. 1

**Fig. 2**